# EUROPÄISCHE PATENTSCHRIFT

(11) **EP 0 752 382 B1**
(45) Veröffentlichungstag und Bekanntmachung des Hinweises auf die Patenterteilung: **01.03.2000**
(21) Anmeldenummer: 96110799.2
(22) Anmeldetag: 04.07.1996
(51) Int. Cl.: B65G 47/88

(54) **Förderstrecke mit einem Anschlag**
Transporting track equipped with a stop
Chemin de transport équipé d'une butée

(30) Priorität: 04.07.1995 DE 19523788
(43) Veröffentlichungstag der Anmeldung: 08.01.1997
(73) Patentinhaber: SIEMENS AKTIENGESELLSCHAFT, 80333 München (DE)
(72) Erfinder: Malow, Siegmar, Dipl.-Ing., 78465 Konstanz (DE)

(56) Entgegenhaltungen:
- DE-A- 3 920 477
- DE-U- 6 948 906
- US-A- 2 306 101
- US-A- 3 990 557
- PATENT ABSTRACTS OF JAPAN vol. 4, no. 143 (M-035), 8.Oktober 1980 & JP-A-55 098022 (MATSUSHITA ELECTRIC IND CO), 25.Juli 1980,

## Beschreibung

Die vorliegende Erfindung betrifft eine Förderstrecke gemäß den Oberbegriffen der unabhängigen Ansprüche.

Bekannte Förderstrecken sind z.B. als Rutsche oder Rollenbahn, bestehend aus hintereinander angeordneten Förderrollen, ausgebildet. Bekannte Anschläge werden elektromagnetisch oder pneumatisch betätigt. Hierbei entstehen oft hohe Aufwendungen für die Herstellung sowie Kosten für die Energiezufuhr und Ansteuerung.

Aus der JP 55-98022 A in: Patents abstract of Japan, sec. M35, October 8, 1980, Vol.4, No.143 ist eine Förderstrecke mit Anschlag nach dem Oberbegriff des Anspruchs 1 bekannt. Der Anschlag ist hierbei in dem Transportbereich vollständig oberhalb der Transportebene angebracht. Der Anschlag bewegt sich infolge seiner Gewichtskraft in eine untere Position. Der Anschlag weist auf seiner Vorderseite eine schräge Ebene auf, gegen die die Transportgüter drücken. Durch diesen Druck wird der Anschlag nach oben gedrückt, bis das Transportgut den Anschlag passieren kann. Dabei schleift der Anschlag über der Oberfläche des Transportgutes. Sobald das Transportgut den Anschlag vollständig passiert hat, bewegt sich der Anschlag durch seine Gewichtskraft wieder nach unten und verhindert so ein Zurückfließen der Transportgüter, da die Rückseite des Anschlags senkrecht ausgebildet ist.

Aus der JP 223926 A in Patents abstracts of Japan sec. M-13 45, December 16, 1992, Vol.16, No. 576 ist ein Anschlag für eine Förderstrecke bekannt, bei der eine Anschlagrolle selbsttätig mit der Kraft einer Feder in den Förderbereich oberhalb der Transportebene gebracht wird und einen Weitertransport der Transportgüter verhindert. Der Anschlag kann durch den Arm eines Fahrzeuges über eine aufwendige Mechanik in eine Position unterhalb der Transportebene gebracht werden, so daß die Transportgüter weiterbefördert werden können.

Aus der US 3,990,557 ist ein Anschlag für eine Förderstrecke bekannt, bei der der Anschlag in den Förderbereich ragt und so seine Funktion ausübt und über einen Hebel, der durch ein Fahrzeug bewegt wird, in einen Bereich unterhalb der Transportebene einklappbar ist.

Schließlich ist aus der DE-U-6948906 ein versenkbarer Anschlag mit einer Anschlagrolle bekannt, wobei der als Sperrnocken ausgebildete, schwenkbare Anschlag durch einen horizontal ausgerichteten Federbolzen in die Fahrebene geschwenkt wird.

Aufgabe der vorliegenden Erfindung ist es, eine Förderstrecke mit einem sich selbsttätig in einen Förderbereich hineinbewegenden Anschlag mit einer Anschlagrolle anzugeben, der von Transportbehältern aus dem Förderbereich bewegt wird, der einfach, kompakt aufgebaut und mit einfachen Mitteln zu betätigen ist.

Diese Aufgabe wird durch eine Förderstrecke nach dem Anspruch 1 gelöst. Anspruch 2 betrifft eine derartige Förderstrecke in Kombination mit einem Transportbehälter.

Ein Vorteil dieser Lösung ist, daß nur sehr wenig Bauteile für den Anschlag benötigt werden und keine Bauteile an der Oberseite des Transportgutes entlangschleifen und so das Transportgut nicht beschädigt wird oder hängenbleiben kann. Die Achse der Anschlagrolle ist mit einer Feder vorgespannt und in einer Führung zwischen einer oberen und einer unteren Position bewegbar. Ohne äußere Krafteinwirkung nimmt die Anschlagrolle durch die vorgespannte Feder die obere Position ein, bei der sie die Transportebene überragt und als Anschlag wirkt.

Vorteilhafte Ausgestaltungen und Weiterbildungen der Erfindung sind den Unteransprüchen zu entnehmen.

Die Krafteinwirkung auf die Anschlagrolle erfolgt durch die über die Förderstrecke zu befördernden Transportbehälter. Die Schubkraft kann z.B. manuell durch einen kurzzeitigen Kraftimpuls in Förderrichtung aufgebracht werden. Die Krafteinwirkung kann bei einer Schrägstellung der Förderstrecke durch die Hangabtriebskraft der zu befördernden Transportbehälter ab einer bestimmten Gewichtskraft der zu befördernden Transportbehälter erfolgen, was einem bestimmten Füllungsgrad entspricht. Sobald die zum Zusammendrücken der Feder erforderliche Kraft erreicht oder überschritten wird, senkt sich die Anschlagrolle auf ihre untere Position auf das angrenzende Förderniveau so ab, daß die Anschlagrolle die Transportebene von unten berührt und als Transportrolle wirkt und dann beim Überfahren keine Bremskräfte auf die Transportbehälter einwirken läßt.

Die Anschlagrolle darf in ihrer ersten Position nur so weit über die Transportebene hinausragen, daß die Berührungspunkte der Tranportbehälter an die Anschlagrolle oberhalb des Mittelpunktes der Anschlagrolle liegen, damit die Transportbehälter durch einen auf die Transportbehälter ausgeübten Kraftimpuls oder bei Transportstrecken mit Gefälle durch die Hangabtriebskraft die Anschlagrolle überwinden. So können durch unterschiedliche Formgebung der Transportbehälterfrontseiten in einem Transportsystem die erforderlichen Kräfte in Transportrichtung für das Passieren einer Anschlagrolle variiert werden.

Die Erfindung wird nachfolgend anhand der Figuren näher beschrieben.

Es zeigen
- FIG 1: die Prinzipskizze einer Förderstrecke mit der Anschlagrolle in der oberen Position und einem als Transportgut bevorzugten Behälter in Seitenansicht,
- FIG 2: die Prinzipskizze aus FIG 1 mit der Anschlagrolle in der unteren Position,
- FIG 3: die Förderstrecke aus FIG 1 mit einem Behälter mit schräger Frontseite.

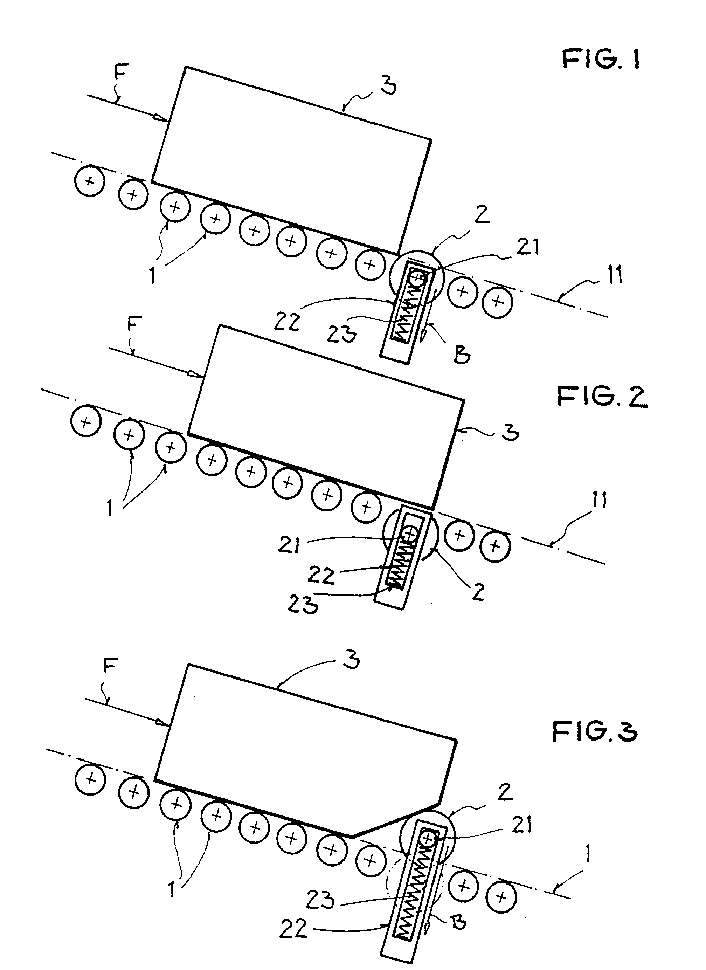

Die Förderstrecke ist als Rollenbahn mit entsprechenden Rollen 1 aufgebaut. Die Rollen 1 spannen eine Transportebene 11 auf. Die Achse 21 einer Anschlagrolle 2 ist in einer Führung 22 bewegbar angeordnet und wird durch eine Feder 23 in eine obere Position gedrückt, in der sie die Transportebene 11 überragt, sofern keine sonstige äußere Kraft einwirkt. Die Position ist dabei so gewählt, daß sich der Berührungspunkt eines Transportbehälters 3 an die Anschlagrolle 2 oberhalb des Mittelpunktes der Anschlagrolle 2 befindet (FIG 1).

Die Anschlagrolle 2 wirkt als Anschlag für den Transportbehälter 3. Durch eine kurzfristig aufgebrachte Schubkraft auf den Transportbehälter 3 in Förderrichtung F, deren Mindestgröße durch die Vorspannung der Feder 23 eingestellt werden kann, wird die Anschlagrolle 2 so nach unten gedrückt, daß sie die Transportebene 11 von unten berührt. In dieser unteren Position wirkt sie als Transportrolle, so daß beim Überfahren keine Bremskräfte auf den Behälter 3 mehr einwirken. Der Winkel zwischen der Förderrichtung F und der Bewegungsrichtung B der Anschlagrolle 2 ist annähernd 90°, da dann der Abstand zwischen der Anschlagrolle 2 und den der Anschlagrolle 2 benachbarten Rollen 1 kleingehalten werden kann und dadurch die Fördereigenschaften nicht beeinträchtigt werden.

Die Transportbehälter 3 können an ihrer Frontseite schräg nach vorn ausgestaltet sein, wie in FIG 3 dargestellt. Dadurch kann die Anschlagrolle 2 so angeordnet werden, daß sie die Transportebene 11 weiter überragen kann als bei Transportbehältern mit senkrechten Frontseiten. Weiterhin können Transportbehälter unterschiedlich starke Schrägungen nach vorne aufweisen und dadurch die erforderliche Kraft in Förderrichtung F zum Überfahren einer Anschlagrolle 2 verschiedene Werte aufweisen.

Auch ist es möglich, die Frontseite der Förderbehälter 3 so auszugestalten, daß der Winkel α zwischen der Frontseite und der Transportebene 11 variiert werden kann. Dies ist z.B. durch vor die Behälterwand montierte änderbare Bleche oder Stege möglich.

## Patentansprüche

1. Förderstrecke, insbesondere für Postgut, mit einem Anschlag, der als Rolle ausgebildet und der sich mittels Federkraft in den oberhalb der Transportebene (11) befindlichen Förderbereich hineinbewegt sowie von Transportbehältern (3) aus dem Förderbereich nach unten bewegt wird, **dadurch gekennzeichnet,** daß die Anschlagrolle (2) in einer federnd gelagerten, geführten Achse geführt ist und eine geradlinige Bewegung annähernd senkrecht zur Transportebene (11) so ausführt, daß in der oberen Endposition der Anschlagrolle (2) die Berührungspunkte der Anschlagrolle (2) mit einem Transportbehälter (3) oberhalb der Drehachse der Anschlagrolle (2) liegen und in der unteren Endposition die Anschlagrolle (2) die Transportebene (11) von unten tangiert.

2. Förderstrecke gemäß Anspruch 1 in Kombination mit einem Transportbehälter, **dadurch gekennzeichnet,** daß in der oberen Endposition der Anschlagrolle (2) die Berührungspunkte der eine wählbare Frontgestaltung aufweisenden Transportbehälter (3) mit der Anschlagrolle (2) oberhalb der Drehachse der Anschlagrolle (2) liegen.

3. Förderstrecke in Kombination mit Transportbehältern nach Anspruch 2, **dadurch gekennzeichnet,** daß die Transportbehälter (3) an ihrer Frontseite senkrechte Wände aufweisen.

4. Förderstrecke in Kombination mit Transportbehältern nach Anspruch 2, **dadurch gekennzeichnet,** daß die Transportbehälter (3) an ihrer Frontseite schräge Begrenzungen aufweisen.

5. Förderstrecke in Kombination mit Transportbehältern nach Anspruch 4, **dadurch gekennzeichnet,** daß die schrägen Begrenzungen für bestimmte Behälter (3) unterschiedlich sind.

6. Förderstrecke in Kombination mit Transportbehältern nach Anspruch 4, **dadurch gekennzeichnet,** daß die schrägen Begrenzungen mit ihren Winkeln zur Transportebene (11) verstellbar sind.

7. Förderstrecke nach Anspruch 1 oder 2, **dadurch gekennzeichnet,** daß die Förderstrecke als Rollenbahn mit entsprechenden Rollen (1) ausgebildet ist.

## Claims

1. Conveying section, in particular for mail, having a stop which is designed as a roller and moves, by means of spring force, into the conveying region located above the transporting plane (11) and is moved downwards out of the conveying region by transporting containers (3), characterized in that the stop roller (2) is guided in a resiliently mounted, guided spindle and executes a rectilinear movement more or less perpendicularly to the transporting plane (11) such that, in the top end position of the stop roller (2), the points of contact between the stop roller (2) and a transporting container (3) are located above the axis of rotation of the stop roller (2) and, in the bottom end position, the stop roller (2) runs at a tangent to the transporting plane (11) from beneath the latter.

2. Conveying section according to Claim 1 in combination with a transporting container, characterized in that, in the top end position of the stop roller (2), the points of contact between the stop roller (2) and the transporting containers (3), which have a selectable front configuration, are located above the axis of rotation of the stop roller (2).

3. Conveying section in combination with transporting containers according to Claim 2, characterized in that the transporting containers (3) have vertical walls on their front side.

4. Conveying section in combination with transporting containers according to Claim 2, characterized in that the transporting containers (3) have sloping boundary surfaces on their front side.

5. Conveying section in combination with transporting containers according to Claim 4, characterized in that, for certain containers (3), the sloping boundary surfaces differ.

6. Conveying section in combination with transporting containers according to Claim 4, characterized in that the sloping boundary surfaces can have their angles in relation to the transporting plane (11) adjusted.

7. Conveying section according to Claims 1 and 2, characterized in that the conveying section is designed as a roller path with corresponding rollers (1).

## Revendications

1. Chemin de transport, en particulier pour marchandises postales, équipé d'une butée qui est réalisée sous forme de rouleau et qui est amenée par la force d'un ressort à l'intérieur de la zone de transport située au-dessus du plan de transport (11) et est déplacée vers le bas hors de la zone de transport par des conteneurs de transport (3), caractérisé en ce que le rouleau de butée (2) passe dans un axe guidé et monté sur ressort et exécute un déplacement rectiligne approximativement perpendiculairement au plan de transport (11) de sorte que dans la position finale supérieure du rouleau de butée (2), les points de contact du rouleau de butée (2) avec un conteneur de transport (3) se situent au-dessus de l'axe de rotation du rouleau de butée (2) et que dans la position finale inférieure, le rouleau de butée (2) est tangent par le bas au plan de transport (11).

2. Chemin de transport selon la revendication 1 combiné avec un conteneur de transport, caractérisé en ce que dans la position finale supérieure du rouleau de butée (2), les points de contact des conteneurs de transport (3) présentant une configuration frontale variable avec le rouleau de butée (2) se situent au-dessus de l'axe de rotation du rouleau de butée (2).

3. Chemin de transport combiné avec des conteneurs de transport selon la revendication 2, caractérisé en ce que les conteneurs de transport (3) présentent sur leur face frontale des parois verticales.

4. Chemin de transport combiné avec des conteneurs de transport selon la revendication 2, caractérisé en ce que les conteneurs de transport (3) présentent sur leur face frontale des délimitations inclinées.

5. Chemin de transport combiné avec des conteneurs de transport selon la revendication 4, caractérisé en ce que les délimitations inclinées sont différentes pour certains conteneurs (3).

6. Chemin de transport combiné avec des conteneurs de transport selon la revendication 4, caractérisé en ce que les angles que forment les délimitations inclinées avec le plan de transport (11) sont réglables.

7. Chemin de transport selon la revendication 1 ou 2, caractérisé en ce que le chemin de transport est réalisé sous forme de transporteur à rouleaux équipé de rouleaux (1) correspondants.
